(19) **Europäisches Patentamt / European Patent Office / Office européen des brevets**

(11) **EP 4 660 224 A1**

(12) **EUROPEAN PATENT APPLICATION**
published in accordance with Art. 153(4) EPC

(43) Date of publication:
**10.12.2025 Bulletin 2025/50**

(21) Application number: **24750279.2**

(22) Date of filing: **30.01.2024**

(51) International Patent Classification (IPC):
***C08J 9/26*** (2006.01)

(52) Cooperative Patent Classification (CPC):
**C08J 9/26; Y02E 60/10**

(86) International application number:
**PCT/JP2024/002814**

(87) International publication number:
**WO 2024/162330 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.02.2023 JP 2023015406**

(71) Applicant: **Teijin Limited**
**Osaka-shi, Osaka 530-0005 (JP)**

(72) Inventors:
- **MORIMOTO, Shinta**
  **Osaka-shi, Osaka 530-0005 (JP)**
- **IKUTA, Mami**
  **Osaka-shi, Osaka 530-0005 (JP)**

(74) Representative: **Carpmaels & Ransford LLP**
**One Southampton Row**
**London WC1B 5HA (GB)**

(54) **POLYOLEFIN MICROPOROUS MEMBRANE**

(57) A polyolefin microporous membrane including a polyolefin, in which a Gurley value is 1 second/100 mL or more and 20 seconds/100 mL or less, a thickness is 5 $\mu$m or more and 25 $\mu$m or less, a porosity is 65% or more and 85% or less, and an average pore diameter is 0.05 $\mu$m or more and less than 0.30 $\mu$m.

EP 4 660 224 A1

Processed by Luminess, 75001 PARIS (FR)

**Description**

Technical Field

The present disclosure relates to a polyolefin microporous membrane.

Background Art

Nonwoven fabrics are widely used as means for collecting foreign matter in gas and liquid. For example, Patent Document 1 describes a liquid filter made of a nonwoven fabric and used in an immersion-type filtration cartridge.

Citation List

Patent Literature

Patent Document 1: Patent Document 1: JP 2019 -198833

Summary of Invention

Technical Problem

When the size of the substance to be collected decreases from about 0.1 $\mu$m to about 1.0 $\mu$m, the filter made of nonwoven fabric may not sufficiently collect the substance. In the case of a nonwoven fabric filter, since the constituent fibers collect a substance by entwining the substance, it is necessary to increase the film thickness of the non-woven fabric in order to enhance the collection performance for small substances. However, when the thickness of the nonwoven fabric is increased, there is also a problem that the size of the filter increases. Therefore, there is a demand for a filter capable of efficiently collecting small size substances.

In addition, in the case where the filter is continuously used and the collected substance is used for some purpose, the larger the proportion of the collected substance recovered from the filter is, the more preferable. That is, a filter having excellent performance of recovering collected substances is required, but a sufficient recovery rate cannot be obtained with a filter made of nonwoven fabric.

Furthermore, from the viewpoint of filter processing efficiency, a larger amount of filter permeation per unit time of a substance that is not intended to be collected is preferable. That is, there is a demand for a filter having excellent performance of selectively causing permeation of a substance other than the collection target.

Although there is a limit to solving such a required characteristic with a nonwoven fabric, on the other hand, since the polyolefin microporous membrane is formed by forming a fibrillar polyolefin in a three-dimensional network shape, there is a possibility that the required characteristics can be achieved at the same time.

In view of the above circumstances, an object of an embodiment of the present disclosure is to provide a polyolefin microporous membrane having excellent performance of collecting a small size substance, performance of recovering the collected substance, and performance of causing permeation of a substance other than the collection target.

Solution to Problem

Specific means for solving the above problems include the following aspects.

< 1 > A polyolefin microporous membrane including a polyolefin, having a Gurley value of 1 second/100 mL or more and 20 seconds/100 mL or less, a thickness of 5 $\mu$m or more and 25 $\mu$m or less, a porosity of 65% or more and 85% or less, and an average pore diameter of 0.05 $\mu$m or more and less than 0.30 $\mu$m.

< 2 > The polyolefin microporous membrane according to < 1 >, in which the polyolefin contains polyethylene.

< 3 > The polyolefin microporous membrane according to < 2 >, in which the polyethylene contains ultra-high molecular weight polyethylene, and a proportion of the ultra-high molecular weight polyethylene to the entire polyolefin is 65% by mass or less.

< 4 > The polyolefin microporous membrane according to any one of < 1 > to < 3 >, in which the Gurley value is 5 seconds/100 mL or more and 15 seconds/100 mL or less.

< 5 > The polyolefin microporous membrane according to any one of < 1 > to < 4 >, in which the porosity is 70% or more and 80% or less.

< 6 > The polyolefin microporous membrane according to any one of < 1 > to < 5 >, in which the polyolefin microporous membrane has an average pore diameter of 0.10 μm or more and 0.25 μm or less.

< 7 > The polyolefin microporous membrane according to < 1 >, wherein a ratio of a tensile breaking strength in the MD direction to a tensile breaking strength in the TD direction (MD direction/TD direction) is 0.75 or more and 1.25 or less.

Advantageous Effects of Invention

According to an embodiment of the present disclosure, there is provided a polyolefin microporous membrane having excellent performance of collecting a small size substance, performance of recovering the collected substance, and performance of causing permeation of a substance other than the collection target.

Description of Embodiments

Hereinafter, embodiments of the invention will be described. These embodiments have been presented by way of example only, and are not intended to limit the scope of the inventions. The mechanism of action described in the present disclosure includes estimation, and the correctness thereof does not limit the scope of the invention.

In the present disclosure, a numerical range indicated using "to" indicates a range including numerical values described before and after "to" as a lower limit value and an upper limit value, respectively.

In a numerical range described stepwise in the present disclosure, an upper limit value or a lower limit value described in one numerical range may be replaced with an upper limit value or a lower limit value of another numerical range described in a stepwise manner. In addition, in the numerical range described in the present disclosure, the upper limit value or the lower limit value of the numerical range may be replaced with a value shown in Examples.

In the present disclosure, the term "step" includes not only an independent step but also a step that cannot be clearly distinguished from other steps as long as the intended purpose of the step is achieved.

In the present disclosure, each component may contain a plurality of corresponding substances. In the present disclosure, when referring to the amount of each component in the composition, when there are a plurality of substances corresponding to each component in the composition, the amount means the total amount of the plurality of substances present in the composition unless otherwise specified.

In the present disclosure, the "MD direction (machine direction)" of the polyolefin microporous membrane means a longitudinal direction in the polyolefin microporous membrane produced in an elongated shape, and the "TD direction (width direction)" means a direction orthogonal to the "machine direction".

< Polyolefin Microporous Membrane >

The polyolefin microporous membrane of the present disclosure is a polyolefin microporous membrane containing polyolefin, having a Gurley value of 1 second/100 mL or more and 20 seconds/100 mL or less, a thickness of 5 μm or more and 25 μm or less, a porosity of 65% or more and 85% or less, and an average pore diameter of 0.05 μm or more and less than 0.30 μm.

The polyolefin microporous membrane of the present disclosure has excellent performance of collecting a small size substance, performance of recovering the collected substance, and performance of causing permeation of a substance other than the collection target. Specifically, the collection performance is particularly excellent when the size of the substance to be collected is 0.1 μm or more and 1.0 μm or less. The substance to be collected may be present in the fluid, and the fluid may be a liquid or a gas.

A polyolefin microporous membrane having an average pore diameter of 0.05 μm or more and less than 0.30 μm generally tends to increase Gurley values. However, in the present disclosure, physical properties are realized in which the Gurley value is 1 second/100 mL or more and 20 seconds/100 mL or less by setting the thickness to 5 μm or more and 25 μm or less and setting the porosity to 65% or more and 85% or less. As a result, the performance of collecting a small size substance and the permeation performance of the fluid are realized in a well-balanced manner, and the recovery performance of the collected substances is also high. When the recovery performance of the substance is good, for example, when the polyolefin microporous membrane is used as a liquid or gas filter, the filter can be repeatedly used, and the environmental load is small. In addition, for example, in the case of using the collected substance, the recovery property is improved and the productivity is high.

In the present disclosure, the polyolefin microporous membrane means a microporous membrane containing polyolefin. The microporous membrane includes a three-dimensional network structure to which fibril-like polyolefin is linked, has a large number of micropores therein to form a structure in which the micropores are connected to each other, and is in a state in which gas or liquid can pass from one surface to the other surface.

Conventional polyolefin microporous membranes have room for improvement in at least one of the performance of collecting a small size substance (hereinafter, also referred to as collection performance), the performance of recovering collected substances (hereinafter, also referred to as recovery performance), and the performance of causing permeation of substances other than collection targets (hereinafter, also referred to as permeation performance).

The polyolefin microporous membrane of the present disclosure satisfying the specific Gurley value, thickness, porosity, and average pore diameter satisfies these performances in a well-balanced manner.

In the present disclosure, the size of the substance to be collected is not particularly limited.

For example, when the substance to be collected is particulate, the average particle size of the substance to be collected may be in the range of 0.05 μm or more and 10 μm or less, or may be in the range of 0.1 μm or more and 5 μm or less.

In the present disclosure, the average particle diameter of the substance to be collected is determined by an image analysis method. Specifically, 100 particles are observed using an electron microscope or the like, and the arithmetic mean value of the particle diameters of the observed particles is taken as the average particle diameter of the collection target.

The collection target may be in a state of being contained in a liquid or a gas.

[Polyolefin constituting polyolefin microporous membrane]

The polyolefin microporous membrane of the present disclosure may consist of only polyolefin or a material other than polyolefin and polyolefin. When the polyolefin microporous membrane is made of a material other than polyolefin and polyolefin, the proportion of the polyolefin in the entire polyolefin microporous membrane is preferably 50% by mass or more, more preferably 70% by mass or more, and still more preferably 80% by mass or more.

The polyolefin microporous membrane may contain only one polyolefin, or may contain two or more types of polyolefins having different molecular structures, different molecular weights, and the like.

The polyolefin microporous membrane may contain polyethylene as a polyolefin. In this case, the polyolefin microporous membrane may contain only polyethylene as a polyolefin or may contain polyethylene and a polyolefin (for example, polypropylene) other than polyethylene. When the polyolefin microporous membrane contains polyethylene and a polyolefin other than polyethylene as the polyolefin, the proportion of polyethylene in the entire polyolefin is preferably 50% by mass or more, more preferably 70% by mass or more, and still more preferably 80% by mass or more.

The polyolefin microporous membrane may contain ultra-high-molecular-weight polyethylene (UHMWPE) as polyethylene contained in the polyolefin. When the polyolefin microporous membrane contains an ultra-high molecular weight polyethylene, the pore diameter of the polyolefin microporous membrane is not too large and the collection performance tends to be excellent.

When the polyolefin microporous membrane contains ultra-high molecular weight polyethylene, the proportion of the ultra-high molecular weight polyethylene to the entire polyolefin is preferably 65% by mass or less. When the proportion of the ultra-high molecular weight polyethylene to the entire polyolefin is 65% by mass or less, the pore diameter of the polyolefin microporous membrane is not too small, and the permeation performance tends to be excellent. The proportion of the ultra-high molecular weight polyethylene to the entire polyolefin is preferably 63% by mass or less, and more preferably 61% by mass or less.

In addition, when the polyolefin microporous membrane contains ultra-high molecular weight polyethylene, the proportion of the ultra-high molecular weight polyethylene to the entire polyolefin is preferably 1% by mass or more. When the proportion of the ultra-high molecular weight polyethylene to the entire polyolefin is 1% by mass or more, the mechanical strength of the polyolefin microporous membrane is easily increased. The proportion of the ultra-high molecular weight polyethylene to the entire polyolefin is preferably 3% by mass or more, and more preferably 5% by mass or more.

When the polyolefin microporous membrane contains an ultra-high molecular weight polyethylene and a polyolefin other than the ultra-high molecular weight polyethylene (hereinafter also referred to as other polyolefin) as the polyolefin, the type of the other polyolefin is not particularly limited. As other polyolefins, high-density polyethylene (HDPE) is preferable. In the present disclosure, high-density polyethylene means polyethylene having a density of 942 kg/m$^3$ or more.

In the present disclosure, the ultra-high molecular weight polyethylene means polyethylene having a weight-average molecular weight of 1,000,000 or more and 6,000,000 or less.

The weight-average molecular weight of the ultra-high molecular weight polyethylene is preferably 3,000,000 or more, and more preferably 4,000,000 or more. The weight-average molecular weight of the ultra-high molecular weight polyethylene is preferably 5,000,000 or less, and more preferably 4,800,000 or less.

In the present disclosure, the weight average molecular weight of the polyolefin is measured by gel permeation chromatography.

Specifically, the polyolefin to be measured is heated and dissolved in o-dichlorobenzene, and measured by gel permeation chromatography (system: Alliance GPC 2000 type manufactured by Waters Corporation, column: GMH6-HT and GMH6-HTL) at the conditions of a column temperature of 135°C and a flow rate of 1.0 mL/min. Molecular weight monodisperse polystyrene (manufactured by Tosoh Corporation) is used for molecular weight calibration.

[Gurley value]

The Gurley value of the polyolefin microporous membrane of the present disclosure is 1 second/100 mL or more and 20 seconds/100 mL or less.

When the Gurley value of the polyolefin microporous membrane of the present disclosure is 1 second/100 mL or more, sufficient collection performance is ensured, and when the Gurley value is 20 seconds/100 mL or less, sufficient permeation performance is ensured.

From the viewpoint of the collection performance, the Gurley value of the polyolefin microporous membrane is preferably 5 seconds/100 mL or more, and more preferably 7 seconds/100 mL or more.

From the viewpoint of permeation performance, the Gurley value of the polyolefin microporous membrane is preferably 15 seconds/100 mL or less, and more preferably 13 seconds/100 mL or less.

In the present disclosure, the Gurley value of the polyolefin microporous membrane is measured using a Gurley densometer manufactured by Toyo Seiki Seisaku-sho, Ltd. in accordance with JIS P8117: 2009. In the measurement, a time during which 200 ml of air passes through a sample of 28.6 mmφ is measured, and a value converted per 100 ml is adopted by halving the time.

[Thickness]

The thickness of the polyolefin microporous membrane of the present disclosure is 5 μm or more and 25 μm or less.

When the thickness of the polyolefin microporous membrane of the present disclosure is 5 μm or more, sufficient collection performance is ensured, and when the thickness is 25 μm or less, sufficient permeation performance is ensured.

From the viewpoint of the collection performance, the thickness of the polyolefin microporous membrane is preferably 7 μm or more, and more preferably 10 μm or more.

From the viewpoint of permeation performance, the thickness of the polyolefin microporous membrane is preferably 22 μm or less, and more preferably 20 μm or less.

In the present disclosure, the thickness of the polyolefin microporous membrane is measured using a contact-type film thickness meter (ABS digimatic indicator manufactured by Mitutoyo Corporation, model number Model ID: ID-S112X). Specifically, the thickness of the polyolefin microporous membrane is measured at 20 points, and the arithmetic mean value thereof is defined as the thickness of the polyolefin microporous membrane. A cylindrical terminal having a diameter of the bottom surface of 6.5 mm is used as the contact terminal. In addition, as another method for measuring the thickness of the polyolefin microporous membrane, there is a method that a contact type thickness meter (LITEMATIC manufactured by Mitutoyo Corporation) is used, a measurement terminal having a cylindrical shape with a diameter of 5 mm is used, the measurement terminal is adjusted so that a load of 7 g is applied during the measurement, 20 points are measured, and the measurement is performed by arithmetically averaging these.

[Porosity]

The polyolefin microporous membrane of the present disclosure has a porosity of 65% or more and 85% or less.

When the porosity of the polyolefin microporous membrane of the present disclosure is 65% or more, sufficient permeation performance is ensured, and when the porosity is 85% or less, sufficient recovery performance is ensured.

From the viewpoint of permeation performance, the porosity of the polyolefin microporous membrane is preferably 67% or more, and more preferably 70% or more.

From the viewpoint of recovery performance, the porosity of the polyolefin microporous membrane is preferably 83% or less, and more preferably 80% or less.

In the present disclosure, the porosity of the polyolefin microporous membrane is determined according to the following calculation method. That is, when the constituent material of the polyolefin microporous membrane is a, b, c,..., n, the mass of each constituent material is Wa, Wb, Wc,..., Wn $(g/cm^2)$, the true density of each constituent material is da, db, dc,..., dn $(g/cm^3)$, and the thickness of the polyolefin microporous membrane is t (cm), the porosity ε (%) is obtained by the following formula.

$$\varepsilon = \{1 - (Wa/da + Wb/db + Wc/dc + ... + Wn/dn)/t\} \times 100$$

[Average Pore Diameter]

The polyolefin microporous membrane of the present disclosure has an average pore diameter of 0.05 μm or more and less than 0.30 μm.

When the average pore diameter of the polyolefin microporous membrane of the present disclosure is 0.05 $\mu$m or more, sufficient permeation performance is ensured, and when the average pore diameter is less than 0.30 $\mu$m, sufficient recovery performance is ensured.

From the viewpoint of permeation performance, the average pore diameter of the polyolefin microporous membrane is preferably 0.10 $\mu$m or more, and more preferably 0.11 $\mu$m or more.

From the viewpoint of recovery performance, the average pore diameter of the polyolefin microporous membrane is preferably 0.25 $\mu$m or less, and more preferably 0.22 $\mu$m or less.

In the present disclosure, the average pore diameter of the polyolefin microporous membrane is determined by a half dry method defined in ASTM E1294-89 using a palm porometer (model: CFP-1200-AEXL) manufactured by PMI Corporation and a Galwick (surface tension: 15.9 dyn/cm) manufactured by PMI Corporation as an immersion liquid. The measurement temperature is 25°C, and the measurement pressure is changed in the range of 0 kPa to 2500 kPa.

[M/T Ratio]

In the polyolefin microporous membrane of the present disclosure, the ratio (also referred to as MD direction/TD direction, M/T ratio) of the tensile breaking strength in the MD direction to the tensile breaking strength in the TD direction is preferably 0.75 or more and 1.25 or less.

When the M/T ratio of the polyolefin microporous membrane is within the above range, the physical strength of the polyolefin microporous membrane is sufficiently ensured, the uniformity in the MD/TD direction is ensured, and the collection rate is improved.

The M/T ratio of the polyolefin microporous membrane of the present disclosure is preferably 0.80 or more, and more preferably 0.85 or more. The M/T ratio of the polyolefin microporous membrane of the present disclosure is preferably 1.10 or less, and more preferably 1.00 or less.

In the present disclosure, the tensile breaking strength of the polyolefin microporous membrane is measured using a Tensilon tester RTG-1225 manufactured by Orientec Co., Ltd. in accordance with JIS K7176: 2014. The sample width is 15 mm, the distance between chucks (gauge length) of the tester is 500 mm, the sample is pulled at a rate of 200 mm/min, and a value (kg/cm) obtained by dividing the load at the time when the sample breaks by the width of the sample is obtained. The same measurement operation is performed three times using three samples, and the obtained values are averaged to obtain the value of the tensile breaking strength.

< Method for Producing Polyolefin Microporous Membrane >

The polyolefin microporous membrane can be produced, for example, by a production method including the following steps (I) to (IV).

Step (I): a step of preparing a solution containing a polyolefin and a solvent.

Step (II): a step of melt-kneading the solution, extruding the obtained melt-kneaded product from a die, and cooling and solidifying the melt-kneaded product to obtain a first gel-like molded product.

Step (III): a step of stretching the first gel-like molding in at least one direction (primary stretching) and drying the solvent to obtain a second gel-like molding.

Step (IV): a step of stretching the second gel-like molding in at least one direction (secondary stretching).

The step (I) is a step of preparing a solution containing a polyolefin and a solvent.

As the solvent, a solution containing a non-volatile solvent having a boiling point of 210°C or higher at atmospheric pressure or a volatile solvent having a boiling point lower than 210°C at atmospheric pressure can be used.

Examples of the solvent used for preparing the solution include non-volatile solvents such as liquid paraffin, paraffin oil, mineral oil, and castor oil, and volatile solvents such as tetralin, ethylene glycol, decalin, toluene, xylene, diethyltriamine, ethylenediamine, dimethyl sulfoxide, and hexane, and particularly, liquid paraffin, decalin, or xylene is preferable. The volatile solvents may be used alone or in combination of two or more thereof. Among them, the volatile solvent is preferably decalin or xylene.

The polyolefin used in the step (I) may be used alone or in combination of two or more kinds thereof, and can be selected according to desired physical properties of the polyolefin microporous membrane.

From the viewpoint of controlling the porous structure of the polyolefin microporous membrane, the solution prepared in the step (I) preferably has a polyolefin concentration of 10% by mass to 35% by mass, more preferably 15% by mass to 30% by mass, and still more preferably 25% by mass to 32% by mass. When the polyolefin concentration in the solution is 10% by mass or more, the occurrence of cutting in the film forming step of the polyolefin microporous membrane can be suppressed, and the mechanical strength of the polyolefin microporous membrane increases, and the handleability is improved. When the polyolefin concentration in the solution is 35% by mass or less, the polyolefin microporous membrane of the present disclosure is easily obtained.

The step (II) is a step of melt-kneading the solution prepared in the step (I), extruding the obtained melt-kneaded product from a die, and cooling and solidifying to obtain a first gel-like molded product. In the step (II), for example, an extruded product is obtained by extrusion from a die in a temperature range from the melting point of the polyolefin to the melting point + 65°C, and then the extruded product is cooled to obtain a first gel-like molded product. The first gel-like molded product is preferably shaped into a sheet. The cooling method is not particularly limited. For example, cooling may be performed by immersion in water or an organic solvent, contact with a cooled metal roll, or the like.

The step (III) is a step of stretching (primary stretching) the first gel-like molded product in at least one direction and drying the solvent to obtain a second gel-like molded product. The stretching step of the step (III) may be uniaxial stretching or biaxial stretching. The biaxial stretching may be sequential biaxial stretching in which longitudinal stretching and transverse stretching are carried out separately, or simultaneous biaxial stretching in which longitudinal stretching and transverse stretching are simultaneously carried out. The stretching ratio (product of the longitudinal stretching ratio and the transverse stretching ratio) of the primary stretching is preferably 1.1 times to 3 times, and more preferably 1.1 times to 2 times, from the viewpoint of controlling the porous structure of the polyolefin microporous membrane. The temperature during the primary stretching is preferably 75°C or less.

The drying (drying step) of the solvent in the step (III) is preferably performed at a temperature at which the second gel-like molded product is not deformed, and more preferably performed at 60°C or less.

The stretching step and the drying step of the step (III) may be performed simultaneously or stepwise. For example, primary stretching may be performed while preliminarily drying, followed by main drying, or primary stretching may be performed between preliminary drying and main drying. The primary stretching can also be performed in a state in which drying is controlled and the solvent remains in a suitable state.

The step (IV) is a step of stretching (secondary stretching) the second gel-like molding in at least one direction. The stretching step of the step (IV) is preferably biaxial stretching. The biaxial stretching may be any of sequential biaxial stretching in which longitudinal stretching and transverse stretching are carried out separately; simultaneous biaxial stretching in which longitudinal stretching and transverse stretching are carried out simultaneously; stretching in the transverse direction after stretching a plurality of times in the longitudinal direction; stretching in the longitudinal direction and stretching a plurality of times in the transverse direction; and sequential biaxial stretching and further stretching once or plural times in the longitudinal direction and/or transverse direction.

The stretching ratio (product of the longitudinal stretching ratio and the transverse stretching ratio) of the secondary stretching is preferably 5 times to 90 times, more preferably 10 times to 60 times, from the viewpoint of controlling the porous structure of the polyolefin microporous membrane. The stretching temperature of the secondary stretching is preferably 70°C to 135°C, and more preferably 80°C to 130°C, from the viewpoint of controlling the porous structure of the polyolefin microporous membrane.

If necessary, the heat fixing treatment may be performed after the step (IV). The temperature of the heat fixing treatment is preferably 110°C to 150°C, and more preferably 120°C to140°C, from the viewpoint of controlling the porous structure of the polyolefin microporous membrane.

If necessary, the extraction treatment of the solvent remaining in the polyolefin microporous membrane and the annealing treatment may be performed after the heat fixing treatment. The residual solvent extraction treatment is performed, for example, by immersing the sheet after the heat fixing treatment in a methylene chloride bath and eluting the residual solvent in methylene chloride. The polyolefin microporous membrane immersed in the methylene chloride bath is preferably withdrawn from a methylene chloride bath and then methylene chloride is removed by drying. The annealing treatment can be performed by transporting the polyolefin microporous membrane on a roller heated to 70°C to 140°C, for example, or transporting the polyolefin microporous membrane in a state of being held so that the dimension in the width direction is constant in a heated atmosphere of 70°C to 140°C after the extraction treatment of the residual solvent.

< Use of Polyolefin Microporous Membrane >

The use of the polyolefin microporous membrane is not particularly limited. Specific uses include an air filter, a liquid filter, a moisture permeable waterproof film, a bag, a dust collection sheet substrate, and the like.

When the polyolefin microporous membrane is used to collect a substance, the average particle diameter of the substance to be collected may be in the range of 0.1 $\mu$m or more and 10 $\mu$m or less, may be in the range of 0.2 $\mu$m or more and 5 $\mu$m or less, or may be in the range of 0.5 $\mu$m or more and 1 $\mu$m or less.

The substance to be collected may be contained in either a liquid or a gas.

Examples

Hereinafter, the polyolefin microporous membrane of the present disclosure will be described more specifically with reference to Examples.

Materials, used amounts, ratios, treatment procedures, and the like shown in the following examples can be appropriately changed without departing from the gist of the present disclosure. Therefore, the range of the polyolefin microporous membrane of the present disclosure should not be construed as being limited to the following specific examples.

[Example 1]

60 parts by mass of ultra-high molecular weight polyethylene (UHMWPE) having a weight average molecular weight (Mw) of 4,600,000 and 40 parts by mass of high-density polyethylene (HDPE) having a weight average molecular weight (Mw) of 560,000 and a density of 950 kg/m$^3$ were mixed to prepare a polyethylene composition. Next, a polyethylene composition and paraffin as a solvent were mixed so that the concentration of the polyethylene composition was 17% by mass to prepare a polyethylene solution.

The polyethylene solution was extruded into a sheet form from a die at a temperature of 178°C, and then the extrudate was cooled in a water bath at a water temperature of 20°C to obtain a first gel-like sheet.

The first gel-like sheet was pre-dried at 30°C for 6 minutes, then subjected to primary stretching at 1.2 times in the MD direction, and finally dried at 30°C for 4 minutes to obtain a second gel-like sheet. The residual amount of the solvent in the second gel-like sheet was less than 1% by mass.

Next, as the secondary stretching, the second gel-like sheet was stretched at a temperature of 75°C in the MD direction at a magnification of 2.5 times, and then stretched at a temperature of 105°C in the TD direction at a magnification of 6.0 times. Immediately after the secondary stretching, heat treatment (heat fixation) was performed at 136°C.

The solvent in the sheet was extracted while continuously immersing the thermally fixed sheet in a methylene chloride bath divided into three tanks for 2.5 minutes in total. After the sheet was carried out of the methylene chloride bath, the sheet was dried on a heating roll at 39°C to remove methylene chloride. Thereafter, the sheet was annealed in a heated atmosphere at 120°C.

Through the above steps, a polyolefin microporous membrane of Example 1 was obtained. When the polyolefin microporous membrane of Example 1 was observed with a scanning electron microscope, it was observed that the polyolefin microporous membrane had a three-dimensional network structure to which fibril-like polyolefin was linked, had a large number of micropores therein to form a structure in which these micropores were linked.

[Examples 2-5 and Comparative Examples 1 to 6]

Polyethylene microporous membranes of Examples 2 to 5 and Comparative Examples 1 to 6 were produced in the same manner as in Example 1 except that the composition of the polyethylene solution or the conditions of the process of producing the polyolefin microporous membrane were changed as shown in Table 1. When the polyolefin microporous membranes of Examples 2-5 and Comparative Examples 1-6 were observed with a scanning electron microscope, it was observed that the polyolefin microporous membrane had a three-dimensional network structure to which fibril-like polyolefin was linked, had a large number of micropores therein to form a structure in which these micropores were linked.

[Table 1]

| | Polyolefin | | Solvent | | Extrusion | | | | | | |
|---|---|---|---|---|---|---|---|---|---|---|---|
| | UHMWPE:HDPE | Content% | Type | Content% | Resin temperature (°C) | Cooling Temperature (°C) | Pre-drying temperature (°C) | Preliminary drying time [minutes] | Primary stretching ratio [times] | Main drying temperature (°C) | Drying time [minutes] |
| Example 1 | 60:40 | 17 | Paraffin | 83 | 178 | 20 | 30 | 6 | 1.2 | 30 | 4 |
| Example 2 | 40:60 | 25 | Decalin | 75 | 166 | 20 | 60 | 10 | 1.5 | 60 | 7 |
| Example 3 | 40:60 | 25 | Decalin | 75 | 166 | 20 | 30 | 7 | 1.2 | 60 | 5 |
| Example 4 | 50:50 | 25 | Decalin | 75 | 169 | 20 | 60 | 7 | 1.4 | 55 | 5 |
| Example 5 | 50:50 | 25 | Decalin | 75 | 169 | 20 | 60 | 7 | 1.4 | 55 | 5 |
| Comparative Example 1 | 15:85 | 30 | Decalin | 70 | 161 | 20 | 60 | 10 | 1.5 | 50 | 7 |
| Comparative Example 2 | 15:85 | 30 | Decalin | 70 | 161 | 20 | 60 | 10 | 1.2 | 55 | 7 |
| Comparative Example 3 | 30:70 | 25 | Decalin | 75 | 149 | 20 | 70 | 10 | 1.1 | 57 | 5 |
| Comparative Example 4 | 40:60 | 25 | Decalin | 75 | 166 | 20 | 30 | 7 | 1.2 | 60 | 5 |
| Comparative Example 5 | 5:95 | 25 | Decalin | 75 | 170 | 20 | 55 | 10 | 1.6 | 50 | 5 |
| Comparative Example 6 | 70:30 | 17 | Paraffin/decalin | 51/32 | 162 | 20 | - | - | 1.2 | 80 | 20 |

[Table 1 (continued)]

| | Secondary stretching | | | | Extraction | | | | | | |
|---|---|---|---|---|---|---|---|---|---|---|---|
| | MD | | TD | | Heat Fixing Temperature (°C) | Number of extraction tank [tank] | Extraction time [min] | Drying method | Drying temperature (°C) | Annealing method | Annealing temperature (°C) |
| | Temperature (°C) | Magnification [times] | Temperature (°C) | Magnification (times) | | | | | | | |
| Example 1 | 75 | 2.5 | 105 | 6.0 | 136 | 3 | 2.5 | Heating roll | 39 | Heating atmosphere | 120 |
| Example 2 | 100 | 3.5 | 130 | 9.0 | 133 | 3 | 2.5 | Heating roll | 40 | Heating atmosphere | 110 |
| Example 3 | 90 | 3.5 | 125 | 9.0 | 128 | 3 | 2.5 | Heating roll | 40 | Heating atmosphere | 110 |
| Example 4 | 90 | 3.0 | 130 | 8.0 | 138 | 3 | 2.5 | Heating roll | 39 | Heating atmosphere | 120 |
| Example 5 | 90 | 3.0 | 130 | 10.0 | 138 | 3 | 2.5 | Heating roll | 39 | Heating atmosphere | 120 |
| Comparative Example 1 | 90 | 3.5 | 120 | 10.0 | 134 | 3 | 2.5 | Heating roll | 40 | Heating atmosphere | 80 |
| Comparative Example 2 | 90 | 2.5 | 120 | 7.0 | 134 | 3 | 2.5 | Heating roll | 40 | Heating atmosphere | 80 |
| Comparative Example 3 | 90 | 6.5 | 130 | 13.5 | 142 | 2 | 1.0 | Heating atmosphere | 40 | Heating roll | 120 |
| Comparative Example 4 | 90 | 3.5 | 130 | 9.0 | 140 | 3 | 2.5 | Heating roll | 40 | Heating atmosphere | 110 |
| Comparative Example 5 | 95 | 3.5 | 115 | 10.0 | 135 | - | - | - | - | - | - |
| Comparative Example 6 | 90 | 5.5 | 105 | 11.0 | 133 | 3 | 2.5 | Heating roll | 39 | Heating atmosphere | 115 |

[Measurement of Gurley Value]

The Gurley value of the polyolefin microporous membrane was measured using a Gurley densometer manufactured by Toyo Seiki Seisaku-sho, Ltd. in accordance with JIS P8117: 2009. In the measurement, a time during which 200 ml of air passes through a sample of 28.6 mmφ was measured, and a value converted per 100 ml was adopted by halving the time. The results are shown in Table 2.

[Measurement of Thickness]

The thickness of the polyolefin microporous membrane was measured using a contact-type film thickness meter (ABS digimatic indicator manufactured by Mitutoyo Corporation, model number Model ID: ID-S112X). Specifically, the thickness of the polyolefin microporous membrane was measured at 20 points, and the arithmetic mean value thereof was defined as the thickness. A cylindrical terminal having a diameter of the bottom surface of 6.5 mm was used as the contact terminal. The results are shown in Table 2.

[Measurement of Porosity]

The porosity of the polyolefin microporous membrane was determined according to the following calculation method. That is, when the constituent materials of the polyolefin microporous membrane were a, b, c,..., n, the mass of each constituent material was Wa, Wb, Wc,..., Wn $(g/cm^2)$, the true density of each constituent material was da, db, dc,..., dn $(g/cm^3)$, and the thickness of the polyolefin microporous membrane was t (cm), the porosity ε (%) was determined by the following formula. The results are shown in Table 2.

$$\varepsilon = \{1 - (Wa/da + Wb/db + Wc/dc + ... + Wn/dn)/t\} \times 100$$

[Measurement of Average Pore Diameter]

The average pore diameter of the polyolefin microporous membrane was determined by a half dry method defined in ASTM E1294-89 using a palm porometer (model: CFP-1200-AEXL) manufactured by PMI Corporation and a Galwick (surface tension: 15.9 dyn/cm) manufactured by PMI Corporation as an immersion liquid. The measurement temperature was 25°C, and the measurement pressure was changed from 0 kPa to 2500 kPa. The results are shown in Table 2.

[Measurement of Tensile Breaking Strength]

The tensile breaking strength of the polyolefin microporous membrane was measured using a Tensilon tester RTG-1225 manufactured by Orientec Co., Ltd. in accordance with JIS K7176: 2014. The sample width was 15 mm, the distance between chucks (gauge length) of the tester was 500 mm, the sample was pulled at a rate of 200 mm/min, and a value obtained by dividing the load at the time when the sample broke by the width of the sample was obtained. The same measurement operation was performed three times using three samples, and the obtained values were averaged to obtain a value of tensile breaking strength (kg/cm). The M/T ratio was calculated from the values of the tensile breaking strengths measured in the MD direction and the TD direction of the polyolefin microporous membrane. The results are shown in Table 2.

[Evaluation of Collection Performance]

A sample having a size of 10 cm × 10 cm was prepared from the polyolefin microporous membrane. This sample was set in a test apparatus equipped with a particle generator. In this state, a test was performed in which nitrogen gas containing NaCl particles having an average particle diameter of 0.5 μm was supplied into the apparatus so as to have a filtration rate of 5.3 cm/sec and passed through the sample.

After one minute from the start of the test, the concentration D1 of the NaCl particles in the space upstream of the position of the sample (the side into which the nitrogen gas flows) and the concentration D2 of the NaCl particles in the space downstream of the position of the sample were measured, and the collection rate of the NaCl particles was calculated by the following formula. A larger collection rate value means that more NaCl particles were collected in the sample. The results are shown in Table 2.

$$\text{Collection rate } (\%) = (1 - D2/D1) \times 100$$

[Evaluation of Recovery Performance]

The mass Wa of the sample was measured before performing the same test as the evaluation of the collection performance. The sample was taken out one minute after the start of the test, and the mass Wb of the sample was measured. Next, the NaCl particles attached to the sample were beaten by hand to measure Wc of the sample. The recovery rate of NaCl particles was calculated by the following formula. The larger the value of the recovery rate, the larger the proportion of the recovered NaCl particles in the collected NaCl particles. The results are shown in Table 2.

$$\text{Recovery rate (\%)} = \{(Wb - Wc)/(Wb - Wa)\} \times 100$$

[Evaluation of Permeation Performance]

The same test as the evaluation of the collection performance was performed, and after one minute from the start of the test, the pressure P1 in the space on the upstream side of the position of the sample and the pressure P2 in the space on the downstream side of the position of the sample were measured and the differential pressure (P1 - P2) was calculated as the pressure loss. The smaller the value of the pressure loss, the more easily the nitrogen gas supplied into the apparatus permeates through the sample. The results are shown in Table 2.

[Weight-Average Molecular Weight of Polyolefin]

The weight average molecular weight of the polyolefin used for producing the polyolefin microporous membrane was measured by gel permeation chromatography.
Specifically, the polyolefin to be measured was heated and dissolved in o-dichlorobenzene, and the measurement was performed by gel permeation chromatography (system: Alliance GPC 2000 type, column: GMH6-HT and GMH6-HTL, manufactured by Waters Corporation) at the condition of a column temperature of 135°C and a flow rate of 1.0 mL/min. Molecular weight monodisperse polystyrene (manufactured by Tosoh Corporation) was used to calibrate the molecular weight.

[Judgment]

When the collection ratio was 99.99% or more, the collection performance was evaluated as "excellent", when the collection ratio was 99.95% or more and less than 99.99%, the collection performance was evaluated as "passed", and when the collection ratio was less than 99.95%, the collection performance was evaluated as "failed".
When the recovery rate was 90% or more, the recovery performance was evaluated as "passed", and when the recovery rate was less than 90%, the recovery performance was evaluated as "failed".
When the pressure loss was 5 kPa or less, the evaluation of the permeation performance was evaluated as "excellent", the evaluation of the permeation performance was evaluated as "passed" when the pressure loss was more than 5 kPa and less than 10 kPa, and the evaluation of the permeation performance was evaluated as "failed" when the pressure loss was 10 kPa or more.
A case where two of the collection performance, the recovery performance, and the permeation performance were excellent and one evaluation was acceptable was evaluated as A, a case where one evaluation was excellent, two evaluations were acceptable was evaluated as B, a case where one evaluation was failed was evaluated as C, and a case where two or more evaluations were failed was evaluated as D. The results are shown in Table 2.

[Table 2]

| | Average Pore Diameter | Thickness | Porosity | Gurley value | M/T Ratio | Evaluation | | | |
|---|---|---|---|---|---|---|---|---|---|
| | | | | | | Collection Rate | Recovery Rate | Pressure Loss | Judgment |
| | μm | μm | % | s/100mL | - | % | % | kPa | |
| Example 1 | 0.07 | 8 | 67 | 19 | 0.81 | 99.99 | 98 | 7 | B |
| Example 2 | 0.13 | 15 | 74 | 12 | 0.91 | 99.99 | 97 | 5 | A |
| Example 3 | 0.18 | 13 | 79 | 8 | 0.95 | 99.99 | 97 | 3 | A |
| Example 4 | 0.21 | 19 | 74 | 11 | 0.78 | 99.99 | 94 | 4 | A |
| Example 5 | 0.21 | 16 | 72 | 11 | 0.70 | 99.98 | 94 | 4 | B |
| Comparative Example 1 | 0.39 | 38 | 81 | 5 | 0.56 | 99.95 | 87 | 2 | C |
| Comparative Example 2 | 0.50 | 75 | 85 | 3 | 0.60 | 99.75 | 78 | 1 | D |
| Comparative Example 3 | 0.14 | 17 | 86 | 12 | 1.25 | 99.99 | 89 | 5 | C |
| Comparative Example 4 | 0.15 | 7 | 60 | 25 | 0.85 | 99.99 | 97 | 10 | C |
| Comparative Example 5 | 2.50 | 12 | 85 | 4 | 0.50 | 98.01 | 63 | 2 | D |
| Comparative Example 6 | 0.03 | 5 | 55 | 63 | 0.69 | 99.99 | 99 | 25 | C |

As shown in Table 2, in the polyolefin microporous membranes of the examples in which the Gurley value, the thickness, the porosity, and the average pore diameter satisfied the conditions of the present disclosure, the results of the determination based on the evaluation of the collection performance, the recovery performance, and the permeation performance were A or B.

The entire disclosure of Japanese Patent Application Publication No. 2023 -015406 is incorporated herein by reference. All documents, patent applications, and technical standards described in the present specification are incorporated by reference in the present specification to the same extent as when individual documents, patent applications, and technical standards are specifically and individually described.

Claims

1.  A polyolefin microporous membrane comprising a polyolefin, wherein a Gurley value is 1 second/100 mL or more and 20 seconds/100 mL or less, a thickness is 5 $\mu$m or more and 25 $\mu$m or less, a porosity is 65% or more and 85% or less, and an average pore diameter is 0.05 $\mu$m or more and less than 0.30 $\mu$m.

2.  The polyolefin microporous membrane according to claim 1, wherein the polyolefin contains polyethylene.

3.  The polyolefin microporous membrane according to claim 2, wherein the polyethylene contains ultra-high molecular weight polyethylene, and a proportion of the ultra-high molecular weight polyethylene to the entire polyolefin is 65% by mass or less.

4.  The polyolefin microporous membrane according to claim 1, wherein the Gurley value is 5 seconds/100 mL or more and 15 seconds/100 mL or less.

5.  The polyolefin microporous membrane according to claim 1, wherein the polyolefin microporous membrane has a porosity of 70% or more and 80% or less.

6.  The polyolefin microporous membrane according to claim 1, wherein the polyolefin microporous membrane has an average pore diameter of 0.10 $\mu$m or more and 0.25 $\mu$m or less.

7.  The polyolefin microporous membrane according to claim 1, wherein a ratio of a tensile breaking strength in the MD direction to a tensile breaking strength in the TD direction (MD direction/TD direction) is 0.75 or more and 1.25 or less.

**EP 4 660 224 A1**

## INTERNATIONAL SEARCH REPORT

International application No.

**PCT/JP2024/002814**

### A. CLASSIFICATION OF SUBJECT MATTER

***C08J 9/26***(2006.01)i
FI: C08J9/26 102; C08J9/26 CES

According to International Patent Classification (IPC) or to both national classification and IPC

### B. FIELDS SEARCHED

Minimum documentation searched (classification system followed by classification symbols)

C08J9/00-9/42; 9/36; B01D69/00-71/82

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2008/093572 A1 (ASAHI KASEI E-MATERIALS CORP.) 07 August 2008 (2008-08-07) paragraphs [0072], [0076], [0089], table 1, example 18 | 1-4, 6 |
| A | | 5, 7 |
| A | JP 11-106552 A (TONEN KAGAKU KK) 20 April 1999 (1999-04-20) claims, examples | 1-7 |
| A | JP 2009-91461 A (ASAHI KASEI CHEMICALS CORPORATION) 30 April 2009 (2009-04-30) claims, examples | 1-7 |
| A | JP 58-59072 A (ASAHI CHEMICAL INDUSTRY CO., LTD.) 07 April 1983 (1983-04-07) claims, examples | 1-7 |
| A | JP 2008-218085 A (ASAHI KASEI CHEMICALS CORPORATION) 18 September 2008 (2008-09-18) claims, examples | 1-7 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/002814**

| Patent document cited in search report | | | Publication date (day/month/year) | Patent family member(s) | | | Publication date (day/month/year) |
|---|---|---|---|---|---|---|---|
| WO | 2008/093572 | A1 | 07 August 2008 | US 2010/0021822 A1 example 18 | | | |
| JP | 11-106552 | A | 20 April 1999 | (Family: none) | | | |
| JP | 2009-91461 | A | 30 April 2009 | (Family: none) | | | |
| JP | 58-59072 | A | 07 April 1983 | (Family: none) | | | |
| JP | 2008-218085 | A | 18 September 2008 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019198833 A
- JP 2023015406 A